# EUROPÄISCHE PATENTANMELDUNG

(11) **EP 3 937 347 A1**
(43) Veröffentlichungstag der Anmeldung: **12.01.2022**
(21) Anmeldenummer: 20184623.5
(22) Anmeldetag: 08.07.2020
(51) Int. Cl.: H02K 1/04, C23C 8/18, H01F 1/153

(54) **MATERIALLAGE FÜR EIN BLECHPAKET EINER ELEKTRISCHEN MASCHINE**

(71) Anmelder: Siemens Aktiengesellschaft, 80333 München (DE)
(72) Erfinder: Schuh, Carsten, 85598 Baldham (DE); Soller, Thomas, 94469 Deggendorf (DE); Vollmer, Rolf, 36129 Gersfeld (DE)

(57) **Zusammenfassung**

Die Erfindung betrifft eine Materiallage (16) für ein Blechpaket (14, 22) einer elektrischen Maschine (2). Um, im Vergleich zum Stand der Technik, eine einfachere und kostengünstigere Herstellung sowie einen größeren Stapelfaktor zu ermöglichen, wird vorgeschlagen, dass die Materiallage (16) aus einem ferromagnetischen Werkstoff hergestellt ist und auf zumindest einer Lagenseite (28, 32) eine elektrisch isolierende Beschichtung (30, 34) aufweist, wobei die elektrisch isolierende Beschichtung (30, 34) einen elektrisch isolierenden Werkstoff umfasst, wobei der elektrisch isolierende Werkstoff der elektrisch isolierenden Beschichtung (30, 34) durch kontrollierte Oxidation des ferromagnetischen Werkstoffs der Materiallage (16) hergestellt ist.

## Beschreibung

Die Erfindung betrifft eine Materiallage für ein Blechpaket einer elektrischen Maschine.

Ferner betrifft die Erfindung ein Blechpaket für eine elektrische Maschine mit einer Mehrzahl von derartigen Materiallagen.

Überdies betrifft die Erfindung eine elektrische rotierende Maschine mit mindestens einem Blechpaket.

Darüber hinaus betrifft die Erfindung ein Verfahren zur Herstellung einer derartigen Materiallage.

In elektrischen Maschinen kommen üblicherweise Blechpakete aus gestapelten Elektroblechen zum Einsatz, um eine Ausbreitung von Wirbelströmen zu unterdrücken. Derartige elektrische Maschinen sind beispielsweise Motoren, Generatoren und Übertrager, wie Transformatoren und Schaltgeräte. Die Elektrobleche, welche beispielsweise einen weichmagnetischen Werkstoff, insbesondere Eisen, enthalten, werden üblicherweise aus gewalzten Großblechen herausgeschnitten beziehungsweise gestanzt. Anschließend werden die Bleche zu einem Blechpaket paketiert. Durch ein derartiges konventionelles Herstellungsverfahren sind derzeit großtechnisch keine Bleche herstellbar, die eine Lagendicke von maximal 100 µm aufweisen. Zudem fällt beim Herausschneiden bzw. Stanzen der Bleche aus den Großblechen Abfall an.

Die Offenlegungsschrift EP 3 595 148 A1 beschreibt ein Verfahren zur Herstellung einer Materiallage mit einer Lagendicke zwischen 0,5 und 500 µm mit den Schritten: Aufbringen einer Suspension, aufweisend wenigstens ein Bindemittel und Festteilchen, durch eine Schablone auf eine Grundfläche zum Erhalt eines Grünkörpers, Austreiben des Bindemittels aus dem Grünkörper, insbesondere mittels Entbinderung, Schaffen eines dauerhaften Zusammenhalts der Festteilchen durch Erwärmung und/oder mittels Verdichtung, insbesondere mittels Sinterung.

Darüber hinaus ist eine Behandlung und Funktionalisierung der Oberflächen erforderlich, um beim Aufbau von Blechstapeln die Einzelbleche voneinander elektrisch zu isolieren. Elektrobleche, die nach einem konventionellen Herstellungsverfahren hergestellt sind, werden üblicherweise mit einem Isolierlack mit einer typischen Lagendicke von 1 bis 4 µm beschichtet, was, insbesondere bei sehr dünnen Elektroblechen mit einer Lagendicke von maximal 100 µm, einen signifikanten zusätzlichen Zeit- und Kostenaufwand darstellt. Darüber hinaus nimmt bei derartig dünnen Elektroblechen die magnetisch nicht wirksame Lackschicht einen anteilig signifikanten Anteil an der Gesamtblechstärke ein und reduziert damit merklich den Stapelfaktor und somit die Leistung der elektrischen Maschine.

Der Erfindung liegt die Aufgabe zugrunde, eine Materiallage für ein Blechpaket einer elektrischen Maschine anzugeben, die, im Vergleich zum Stand der Technik, einfacher und kostengünstiger herstellbar ist sowie einen größeren Stapelfaktor ermöglicht.

Die Aufgabe wird erfindungsgemäß gelöst durch eine Materiallage für ein Blechpaket einer elektrischen Maschine, welche aus einem ferromagnetischen Werkstoff hergestellt ist und auf zumindest einer Lagenseite eine elektrisch isolierende Beschichtung aufweist, wobei die elektrisch isolierende Beschichtung einen elektrisch isolierenden Werkstoff umfasst und wobei der elektrisch isolierende Werkstoff der elektrisch isolierenden Beschichtung durch kontrollierte Oxidation des ferromagnetischen Werkstoffs der Materiallage hergestellt ist.

Ferner wird die Aufgabe erfindungsgemäß gelöst durch ein Blechpaket für eine elektrische Maschine mit einer Mehrzahl von derartigen Materiallagen.

Überdies wird die Aufgabe erfindungsgemäß gelöst durch eine elektrische rotierende Maschine mit mindestens einem Blechpaket.

Darüber hinaus wird die Aufgabe erfindungsgemäß gelöst durch ein Verfahren zur Herstellung einer Materiallage für ein Blechpaket einer elektrischen Maschine, wobei aus einem ferromagnetischen Werkstoff ein Grünkörper hergestellt wird, wobei der Grünkörper gesintert wird, wobei unmittelbar nach dem Sintervorgang auf zumindest einer Lagenseite eine elektrisch isolierende Beschichtung durch kontrollierte Oxidation des ferromagnetischen Werkstoffs der Materiallage hergestellt wird.

Die in Bezug auf die Materiallage nachstehend angeführten Vorteile und bevorzugten Ausgestaltungen lassen sich sinngemäß auf das Blechpaket, die elektrische Maschine und das Verfahren übertragen.

Der Erfindung liegt die Überlegung zugrunde, einen Stapelfaktor in einem Blechpaket für eine elektrische Maschine zu erhöhen, indem die Schichtdicke einer Isolation zwischen den Materiallagen reduziert wird. Derartige Materiallagen sind aus einem ferromagnetischen Werkstoff hergestellt. Ferromagnetische Werkstoffe sind beispielsweise Eisen und Eisenlegierungen, insbesondere Eisenbasislegierungen. Eisenbasislegierungen sind beispielsweise Eisen-Kobalt und Eisen-Silizium. Eine derartige Isolation wird als elektrisch isolierende Beschichtung ausgeführt und ist auf zumindest einer Lagenseite angeordnet, wobei die elektrisch isolierende Beschichtung einen elektrisch isolierenden Werkstoff umfasst. Elektrisch isolierende Werkstoffe sind beispielsweise Eisenoxide, insbesondere Eisenmonooxid (FeO, auch Eisen(II)-oxid genannt), Trieisentetraoxid (Fe₃O₄, auch Eisen(II,III)-oxid oder Magnetit genannt) und Dieisentrioxid (Fe₂O₃, auch Eisen(III)-oxid genannt). Die elektrisch isolierende Beschichtung wird hergestellt, indem der ferromagnetische Werkstoff der Materiallage kontrolliert oxidiert wird. Eine kontrollierte Oxidation findet in einem abgeschlossenen Bereich mit einer kontrollierten Atmosphäre statt. Dies bedeutet, dass für die kontrollierte Oxidation ein definierter Sauerstoffpartialdruck, bei einem vorgegebenen Temperaturbereich, in dem der Sauerstoffpartialdruck zur Verfügung steht, über eine definierte Zeitdauer eingestellt wird. Auf diese Weise sind über ein definiertes Redox-Potential eine gewünschte Zusammensetzung und Schichtdicke der elektrisch isolierenden Beschichtung einfach und kostengünstig herstellbar. Ferner sind durch kontrollierte Oxidation sehr dünne Schichten, beispielsweise dünner als 1 µm, herstellbar, was den Stapelfaktor im Blechpaket erhöht.

Eine weitere Ausführungsform sieht vor, dass der ferromagnetische Werkstoff eine elektrische Leitfähigkeit von mindestens 8 MS/m aufweist. Beispielsweise ist der ferromagnetische Werkstoff Eisen oder eine Eisenlegierung. Erfahrungsgemäß hat sich eine derartige Leitfähigkeit als besonders vorteilhaft erwiesen.

Eine weitere Ausführungsform sieht vor, dass der ferromagnetische Werkstoff Eisen enthält, wobei der elektrisch isolierende Werkstoff ein Eisenoxid, insbesondere Eisenmonooxid und/oder Trieisentetraoxid, enthält. Eisen ist aufgrund seiner metallurgischen Eigenschaften gut für die Herstellung dünner Bleche geeignet. Ferner ist Eisen einfach und kostengünstig kontrolliert oxidierbar, wobei durch die kontrollierte Oxidation dünne Oxidschichten herstellbar sind, die einen großen Stapelfaktor ermöglichen.

Eine weitere Ausführungsform sieht vor, dass der elektrisch isolierende Werkstoff der elektrisch isolierenden Beschichtung einen ferrimagnetischen Werkstoff aufweist und/oder eine Permeabilität von mindestens 3 aufweist. Ein ferrimagnetischer Werkstoff ist beispielsweise Trieisentetraoxid. Durch eine derartige Isolation wird das magnetische Volumen des Blechpakets erhöht.

Eine weitere Ausführungsform sieht vor, dass die elektrisch isolierende Beschichtung eine Schichtdicke von maximal 1 µm aufweist. Durch eine derartig geringe Schichtdicke wird auch bei dünnen Blechen ein ausreichend hoher Stapelfaktor erreicht.

Eine weitere Ausführungsform sieht vor, dass die Materiallage eine Lagendicke von 10 µm bis 150 µm, insbesondere 10 µm bis 100 µm, aufweist. Bei einer derartigen Lagendicke wird, beispielsweise beim Einsatz in einer elektrischen Maschine, eine ausreichende Wirbelstrom-Unterdrückung erreicht.

Eine weitere Ausführungsform sieht vor, dass die Materiallage aus einem Grünkörper hergestellt ist. Der Grünkörper wird beispielsweise durch Siebdruck, Schablonendruck oder Binder-Jetting hergestellt. Insbesondere weist der Grünkörper ein, insbesondere organisches, Bindemittel und ferromagnetische Festteilchen auf, wobei die ferromagnetischen Festteilchen beispielsweise als Legierungspulver oder als Mischungen von Pulvern aus Reinelementen vorliegen. Das Pulver kann hinsichtlich Festigkeit, magnetischer und/oder elektrischer Eigenschaften, Wärmeleitfähigkeit und Art der Oxidationsprodukte angepasst werden.

Eine weitere Ausführungsform sieht vor, dass die Materiallage auf beiden Lagenseiten die elektrisch isolierende Beschichtung aufweist. Eine beidseitige Isolation erhöht, insbesondere bei dünnen Isolationsschichten, die Zuverlässigkeit.

Eine weitere Ausführungsform sieht vor, dass der Grünkörper unter reduzierender Atmosphäre gesintert wird. Eine reduzierende Atmosphäre enthält beispielsweise ein Wasserstoff-Stickstoff-Gemisch oder ein Wasserstoff-Edelgas-, insbesondere ein Wasserstoff-Argon-Gemisch. Der Stickstoff beziehungsweise das Edelgas fungieren als Spülgas. Beispielsweise wird der Grünkörper unter einem Formiergas, welches 95 % Stickstoff und 5 % Wasserstoff enthält, gesintert. Durch die reduzierende Atmosphäre werden eine Oxidation und damit Verunreinigungen verhindert. Insbesondere organische Bindemittel werden in einer reduzierenden Atmosphäre durch Entfernen der Kohlenstoffatome aus dem Grünkörper im Wesentlichen rückstandslos ausgetrieben.

Eine weitere Ausführungsform sieht vor, dass durch Zugabe von Wasserdampf gezielt ein Redox-Potential zur kontrollierten Oxidation des ferromagnetischen Werkstoffs eingestellt wird. Die gezielte Einstellung des Redox-Potentials erfolgt beispielsweise über eine Konzentration des Wasserdampfs in der Atmosphäre bei einer definierten Temperatur. Eine Oxidation durch Zuführung von Wasserdampf ist, insbesondere unmittelbar nach dem Sintern unter reduzierender Atmosphäre, einfach und kostengünstig.

Eine weitere Ausführungsform sieht vor, dass durch Einstellen eines Sauerstoffpartialdrucks, eines Temperaturbereichs, in dem der Sauerstoffpartialdruck zur Verfügung steht, und einer Zeitdauer, die zumindest eine Lagenseite kontrolliert oxidiert wird. Beispielsweise wird die Schichtdicke bei gegebenem Sauerstoffpartialdruck und gegebener Temperatur, bei der der Sauerstoffpartialdruck zur Verfügung steht, im Wesentlichen durch die Zeitdauer eingestellt, während die Zusammensetzung der sich ausbildenden Oxidschicht im Wesentlichen durch den Sauerstoffpartialdruck und den Temperaturbereich, in dem der Sauerstoffpartialdruck zur Verfügung steht, gesteuert wird. Durch Variation der Parameter lassen sich Oxidschichten gewünschter Art und Schichtdicke einfach und kostengünstig herstellen.

Eine weitere Ausführungsform sieht vor, dass der ferromagnetische Werkstoff Eisen enthält, wobei der Sauerstoffpartialdruck, der Temperaturbereich, in dem der Sauerstoffpartialdruck zur Verfügung steht, und die Zeitdauer derartig eingestellt werden, dass der elektrisch isolierende Werkstoff einen vorgegebenen Anteil an Eisenmonooxid und/oder Trieisentetraoxid enthält. Auf diese Weise lassen sich Eisenoxidschichten gewünschter Art und Schichtdicke einfach und kostengünstig herstellen.

Im Folgenden wird die Erfindung anhand der in den Figuren dargestellten Ausführungsbeispiele näher beschrieben und erläutert.

Es zeigen:
- FIG 1: eine schematische Querschnittsdarstellung einer elektrischen rotierenden Maschine,
- FIG 2: eine schematische Darstellung einer ersten Ausführung einer Materiallage,
- FIG 3: eine schematische Darstellung einer zweiten Ausführung einer Materiallage,
- FIG 4: eine schematische Darstellung eines Verfahrens zur Herstellung einer Materiallage,
- FIG 5: ein thermodynamisches Zustandsdiagramm für verschiedene Eisenoxide und
- FIG 6: isotherme Oxidationskinetikkurven für Eisen als Funktion von Zeit und Temperatur.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

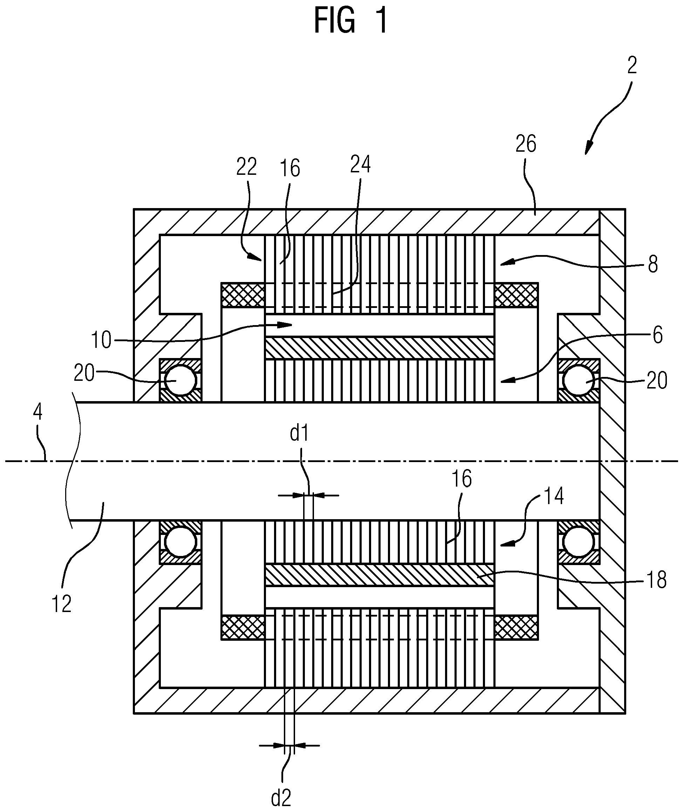

FIG 1 zeigt eine schematische Querschnittsdarstellung einer elektrischen rotierenden Maschine 2. Die elektrische rotierende Maschine 2, welche als Motor und/oder als Generator verwendbar ist, weist einen um eine Rotationsachse 4 rotierbaren Rotor 6 und einen Stator 8 auf, wobei der Stator 8 beispielhaft radial außerhalb des Rotors 6 angeordnet ist. Die Rotationsachse 4 definiert eine Axialrichtung, eine Radialrichtung und eine Umfangsrichtung. Zwischen dem Rotor 6 und dem Stator 8 ist ein Fluidspalt 10, der insbesondere als Luftspalt ausgeführt ist, ausgebildet.

Der Rotor 6 weist eine Welle 12 und ein Rotorblechpaket 14 auf, wobei das Rotorblechpaket 14 drehfest mit der Welle 12 verbunden ist. Das Rotorblechpaket 14 umfasst eine Vielzahl von gestapelten gegeneinander elektrisch isolierten Materiallagen 16, die eine erste Lagendicke d1 im Bereich von 10 µm bis 150 µm, insbesondere 10 µm bis 100 µm, aufweisen und aus einem ferromagnetischen Werkstoff, beispielsweise aus Eisen oder einer Eisenlegierung, hergestellt sind. Darüber hinaus umfasst der Rotor 6 eine Mehrzahl von mit dem Rotorblechpaket 14 verbundenen Permanentmagneten 18 für einen Betrieb als Synchronmaschine. Der Rotor 6 kann, insbesondere anstelle der Permanentmagneten 18, einen Kurzschlusskäfig für einen Betrieb als Asynchronmaschine oder eine Erregerwicklung aufweisen. Die Welle 12 des Rotors 6 ist über Lager 20 drehbeweglich angeordnet.

Der Stator 8 umfasst ein Statorblechpaket 22, in dem eine Statorwicklung 24 aufgenommen ist. Das Statorblechpaket 22 umfasst eine Vielzahl von gestapelten gegeneinander elektrisch isolierten Materiallagen 16, die eine zweite Lagendicke d2 im Bereich von 10 µm bis 150 µm, insbesondere 10 µm bis 100 µm, aufweisen und aus einem ferromagnetischen Material, beispielsweise aus Eisen oder einer Eisenlegierung, hergestellt sind. Der Rotor 6 und der Stator 8 sind in einem geschlossenen Gehäuse 26 untergebracht.

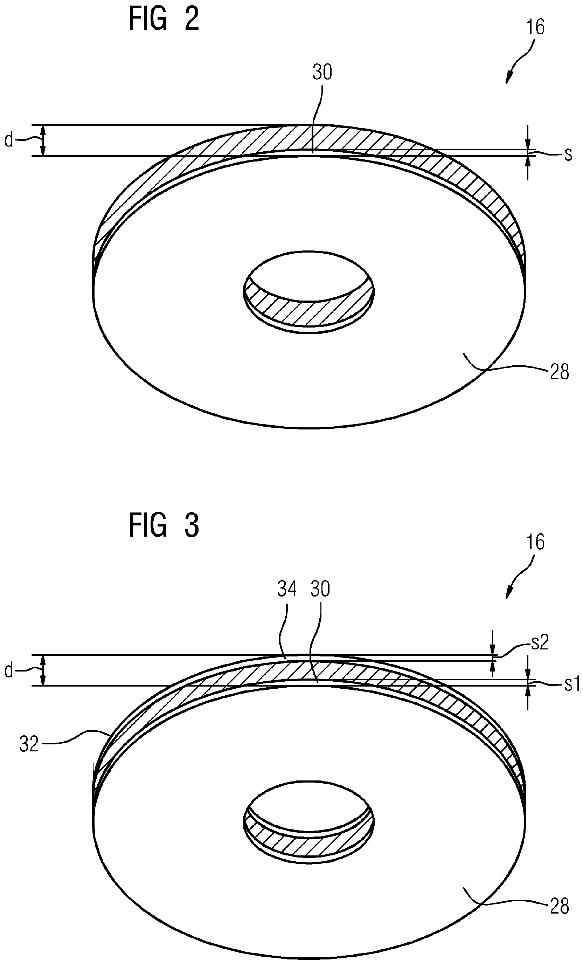

FIG 2 zeigt eine schematische Darstellung einer ersten Ausführung einer Materiallage 16, welche eine Lagendicke d im Bereich von 10 µm bis 150 µm, insbesondere 10 µm bis 100 µm, aufweist und beispielsweise durch Siebdruck, Schablonendruck oder Binder-Jetting und anschließendes Sintern hergestellt ist. Die Materiallage 16 in FIG 2 kann für ein Rotorblechpaket 14 oder ein Statorblechpaket 22 konfiguriert sein und ist aus einem ferromagnetischen Werkstoff, beispielsweise aus Eisen oder einer Eisenbasislegierung, mit einer elektrischen Leitfähigkeit von mindestens 8 MS/m hergestellt. Eine Lagenseite 28 der Materiallage 16 weist eine elektrisch isolierende Beschichtung 30 auf, welche dazu geeignet ist, gestapelte Materiallagen 16, beispielweise bei Verwendung in einem Blechpaket 14, 22 gegeneinander elektrisch zu isolieren. Die elektrisch isolierende Beschichtung 30 ist aus einem elektrisch isolierenden Werkstoff hergestellt, wobei der elektrisch isolierende Werkstoff eine Leitfähigkeit aufweist, die mindestens 1000 Male geringer ist als die Leitfähigkeit des ferromagnetischen Werkstoffs. Darüber hinaus weist die elektrisch isolierende Beschichtung 30 eine Schichtdicke s1 von maximal 1 µm auf.

Die elektrisch isolierende Beschichtung 30 wird durch kontrollierte Oxidation des ferromagnetischen Werkstoffs der Materiallage 16 hergestellt. Bei einer kontrollierten Oxidation wird über ein definiertes Redox-Potential eine Zusammensetzung der elektrisch isolierenden Beschichtung 30 sowie die Schichtdicke s eingestellt. Hierbei wird die Oberfläche der Materiallage 16 unter einem definierten Sauerstoffpartialdruck, bei einem vorgegebenen Temperaturbereich, in dem der Sauerstoffpartialdruck zur Verfügung steht, über eine definierte Zeitdauer oxidiert. Die Zusammensetzung und Schichtdicke s der sich ausbildenden Oxidschicht ist somit durch die Zusammensetzung der Atmosphäre, die Temperatur und die Zeitdauer steuerbar.

Bei einer aus Eisen hergestellten Materiallage 16 wird die Oberfläche der Materiallage 16 mit Hilfe von Wasserdampf oxidiert, wobei über einen Anteil des Wasserdampfs in der Atmosphäre die Art und Stärke der Oxidschicht einstellbar ist. Hierbei entsteht der elektrisch isolierende Werkstoff Eisenmonooxid (FeO) und/oder Trieisentetraoxid (Fe₃O₄), wobei die Anteile der Eisenoxide über die Zusammensetzung der Atmosphäre, die Temperatur und die Zeitdauer steuerbar sind.

Insbesondere weist der elektrisch isolierende Werkstoff der elektrisch isolierenden Beschichtung 30 eine Permeabilität von mindestens 3 auf, wobei die Permeabilität des elektrisch isolierenden Werkstoffs über seine Zusammensetzung steuerbar ist. Die weitere Ausführung der Materiallage 16 in FIG 2 entspricht der Ausführung in FIG 1.

FIG 3 zeigt eine schematische Darstellung einer zweiten Ausführung einer Materiallage 16, welche auf beiden Lagenseiten 28, 32 eine elektrisch isolierende Beschichtung 30, 34 aufweist. Auf der ersten Lagenseite 28 ist eine erste Schichtdicke s1 ausgebildet, während auf der zweiten Lagenseite 32 eine zweite Schichtdicke s2 ausgebildet ist. Beispielsweise entspricht die erste Schichtdicke s1 der zweiten Schichtdicke s2. Die weitere Ausführung der Materiallage 16 in FIG 3 entspricht der Ausführung in FIG 2.

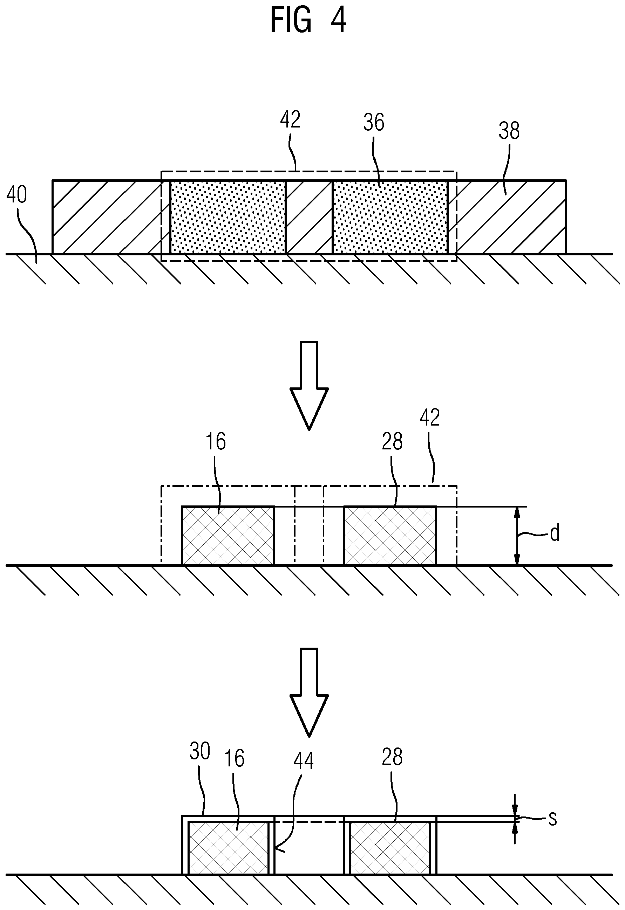

FIG 4 zeigt eine schematische Darstellung eines Verfahrens zur Herstellung einer Materiallage 16. In einem Verfahrensschritt wird eine Suspension 36, welche wenigstens ein, insbesondere organisches, Bindemittel und ferromagnetische Festteilchen, insbesondere Eisenpartikel, umfasst, durch eine Schablone 38 auf eine Grundfläche 40 zum Erhalt eines Grünkörpers 42 aufgebracht. Beispielsweise wird die Suspension 36 mittels eines Rakels über die Schablone 38, die ein Sieb aufweisen kann, auf der Grundfläche 40 aufgebracht. Alternativ wird der Grünkörper 42 mittels Binder-Jetting hergestellt.

In einem folgenden Verfahrensschritt wird das Bindemittel aus dem Grünkörper 42, insbesondere mittels Entbinderung, ausgetrieben und der Grünkörper 42 gesintert, wobei durch den Sinterprozess ein dauerhafter Zusammenhalt der ferromagnetischen Festteilchen geschaffen wird. Das Sintern und Entbindern findet in einem abgeschlossenen Bereich mit einer kontrollierten Atmosphäre statt. Der Grünkörper 42 wird unter reduzierender Atmosphäre entbindert und gesintert. Die reduzierende Atmosphäre enthält beispielsweise ein Wasserstoff-StickstoffGemisch oder ein Wasserstoff-Edelgas-, insbesondere ein Wasserstoff-Argon-Gemisch. Der Stickstoff beziehungsweise das Edelgas fungieren als Spülgas. Beispielsweise wird der Grünkörper 42 unter einem Formiergas, welches 95 % Stickstoff und 5 % Wasserstoff enthält, gesintert. Durch die reduzierende Atmosphäre werden eine Oxidation und damit Verunreinigungen verhindert. Insbesondere organische Bindemittel werden in einer reduzierenden Atmosphäre durch Entfernen der Kohlenstoffatome aus dem Grünkörper im Wesentlichen rückstandslos ausgetrieben. Sowohl beim Entbindern als auch beim Sintern reduzieren sich die Abmessungen des Grünkörpers 42 abhängig vom verwendeten Material, sodass die durch den Sinterprozess entstehende Materiallage 16 eine Lagendicke d von 10 µm bis 150 µm, insbesondere 10 µm bis 100 µm, aufweist.

In einem folgenden Verfahrensschritt wird eine elektrisch isolierende Beschichtung 30 durch kontrollierte Oxidation des ferromagnetischen Werkstoffs der Materiallage 16 hergestellt. Die Herstellung der elektrisch isolierenden Beschichtung 30 durch Oxidation findet in einem abgeschlossenen Bereich mit einer kontrollierten Atmosphäre statt. Insbesondere findet die Herstellung der elektrisch isolierenden Beschichtung 30 im selben abgeschlossenen Bereich statt wie der Sintervorgang. Zumindest ein Teil der Oberfläche 44 der Materiallage 16, welche mit der die Materiallage 16 umgebenden Atmosphäre in fluidtechnischer Verbindung steht, wird unter einem definierten Sauerstoffpartialdruck, bei einem vorgegebenen Temperaturbereich, in dem der Sauerstoffpartialdruck zur Verfügung steht, über eine definierte Zeitdauer oxidiert. Die Schichtdicke s wird bei gegebener Zusammensetzung der Atmosphäre und Temperatur im Wesentlichen durch die Zeitdauer eingestellt. Die Zusammensetzung der sich ausbildenden Oxidschicht ist im Wesentlichen durch den Sauerstoffpartialdruck und den Temperaturbereich, in dem der Sauerstoffpartialdruck zur Verfügung steht, steuerbar. Insbesondere ist die Materiallage 16 aus Eisen hergestellt, wobei die Oberfläche 44 der Materiallage 16 mit Hilfe von Wasserdampf in der Atmosphäre oxidiert wird. Eine beidseitige Oxidation wird beispielsweise durch Wenden der Materiallage 16 ermöglicht. Die weitere Ausführung der Materiallage 16 in FIG 4 entspricht der Ausführung in FIG 2.

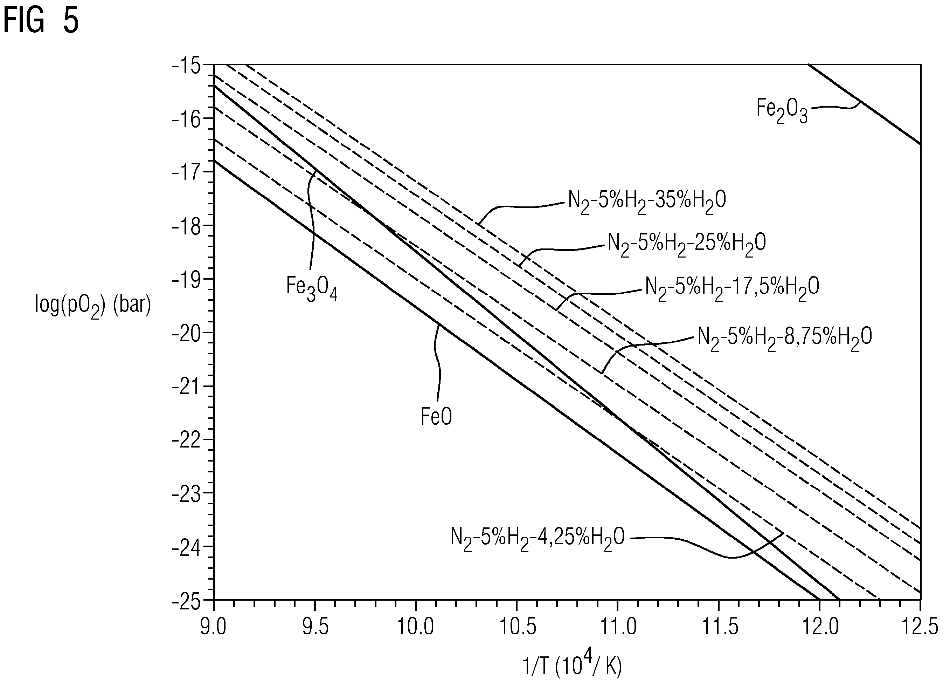

FIG 5 zeigt ein thermodynamisches Zustandsdiagramm für verschiedene Eisenoxide. Das thermodynamische Zustandsdiagramm zeigt den jeweiligen Sauerstoffpartialdruck pO₂ als Funktion der reziproken Temperatur T und des Anteils an Wasserdampf in einer H₂-H₂O Atmosphäre, wobei die Atmosphäre Stickstoff, Wasserstoff und Wasserdampf enthält. Ferner sind die Zersetzungsdrücke verschiedener Eisenoxide (FeO, Fe₃O₄, Fe₂O₃) als Funktion der reziproken Temperatur T dargestellt. Der Zersetzungsdruck, der auch Dissoziationsdruck oder Bildungsdruck genannt wird, gibt den Sauerstoffpartialdruck an, an dem gerade ein Gleichgewicht zwischen einer Oxidation des Metalls zum Metalloxid und einer Reduktion des Metalloxids zum Metall herrscht. Ist in der Atmosphäre der Sauerstoffpartialdruck pO₂ größer als der Zersetzungsdruck des jeweiligen Metalls, so findet eine Oxidation statt. Ist beispielsweise der Sauerstoffpartialdruck pO₂ größer als der Zersetzungsdruck von Fe₃O₄, ist Fe₃O₄ stabil, ist er hingegen kleiner, bildet sich die sauerstoffärmere Verbindung FeO aus. Ist der Sauerstoffpartialdruck pO₂ bei einer bestimmten Temperatur identisch mit dem Zersetzungsdruck, dann koexistieren zwei feste Phase, z.B. FeO und Fe₃O₄, miteinander. Daher ist mit dem in FIG 4 dargestellten Verfahren über den Sauerstoffpartialdruck und den Temperaturbereich, in dem der Sauerstoffpartialdruck zur Verfügung steht, einstellbar, welche Oxide sich in der elektrisch isolierenden Beschichtung 30 ausbilden.

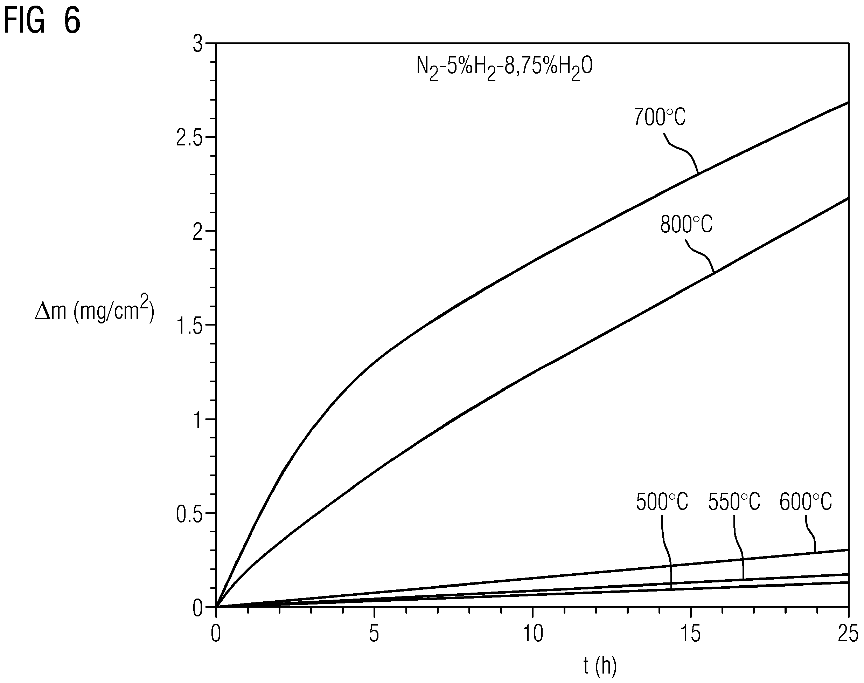

FIG 6 zeigt isotherme Oxidationskinetikkurven für Eisen als Funktion von Zeit t und Temperatur T. Es ist eine Gewichtszunahme Δm von Eisenoxiden als Funktion von Zeit t und Temperatur T in einer definierten Atmosphäre dargestellt. Daher ist mit dem in FIG 4 dargestellten Verfahren bei gegebener Atmosphäre durch Variation der Zeit t und Temperatur T eine definierte Schichtdicke s ausbildbar.

Zusammenfassend betrifft die Erfindung eine Materiallage 16 für ein Blechpaket 14, 22 einer elektrischen Maschine 2. Um, im Vergleich zum Stand der Technik, eine einfachere und kostengünstigere Herstellung sowie einen größeren Stapelfaktor zu ermöglichen, wird vorgeschlagen, dass die Materiallage 16 aus einem ferromagnetischen Werkstoff hergestellt ist und auf zumindest einer Lagenseite 28, 32 eine elektrisch isolierende Beschichtung 30, 34 aufweist, wobei die elektrisch isolierende Beschichtung 30, 34 einen elektrisch isolierenden Werkstoff umfasst, wobei der elektrisch isolierende Werkstoff der elektrisch isolierenden Beschichtung 30, 34 durch kontrollierte Oxidation des ferromagnetischen Werkstoffs der Materiallage 16 hergestellt ist.

## Patentansprüche

1. Materiallage (16) für ein Blechpaket (14, 22) einer elektrischen Maschine (2),
welche aus einem ferromagnetischen Werkstoff hergestellt ist und
auf zumindest einer Lagenseite (28, 32) eine elektrisch isolierende Beschichtung (30, 34) aufweist,
wobei die elektrisch isolierende Beschichtung (30, 34) einen elektrisch isolierenden Werkstoff umfasst,
wobei der elektrisch isolierende Werkstoff der elektrisch isolierenden Beschichtung (30, 34) durch kontrollierte Oxidation des ferromagnetischen Werkstoffs der Materiallage (16) hergestellt ist.

2. Materiallage (16) nach Anspruch 1,
wobei der ferromagnetische Werkstoff eine elektrische Leitfähigkeit von mindestens 8 MS/m aufweist.

3. Materiallage (16) nach einem der Ansprüche 1 oder 2,
wobei der ferromagnetische Werkstoff Eisen enthält und
wobei der elektrisch isolierende Werkstoff ein Eisenoxid, insbesondere Eisenmonooxid und/oder Trieisentetraoxid, enthält.

4. Materiallage (16) nach einem der vorherigen Ansprüche,
wobei der elektrisch isolierende Werkstoff der elektrisch isolierenden Beschichtung (30, 34) einen ferrimagnetischen Werkstoff aufweist und/oder eine Permeabilität von mindestens 3 aufweist.

5. Materiallage (16) nach einem der vorherigen Ansprüche,
wobei die elektrisch isolierende Beschichtung (30, 34) eine Schichtdicke (s, s1, s2) von maximal 1 µm aufweist.

6. Materiallage (16) nach einem der vorherigen Ansprüche, welche eine Lagendicke (d, d1, d2) von 10 µm bis 150 µm, insbesondere 10 µm bis 100 µm, aufweist.

7. Materiallage (16) nach einem der vorherigen Ansprüche, welche aus einem Grünkörper (42) hergestellt ist.

8. Materiallage (16) nach einem der vorherigen Ansprüche, welche auf beiden Lagenseiten (28, 32) die elektrisch isolierende Beschichtung (30, 34) aufweist.

9. Blechpaket (14, 22) für eine elektrische Maschine (2) mit einer Mehrzahl von Materiallagen (16) nach einem der Ansprüche 1 bis 8.

10. Elektrische rotierende Maschine (2) mit mindestens einem Blechpaket (14, 22) nach Anspruch 9.

11. Verfahren zur Herstellung einer Materiallage (16) für ein Blechpaket (14, 22) einer elektrischen Maschine (2),
wobei aus einem ferromagnetischen Werkstoff ein Grünkörper (42) hergestellt wird,
wobei der Grünkörper (42) gesintert wird,
wobei unmittelbar nach dem Sintervorgang auf zumindest einer Lagenseite (28, 32) eine elektrisch isolierende Beschichtung (30, 34) durch kontrollierte Oxidation des ferromagnetischen Werkstoffs der Materiallage (16) hergestellt wird.

12. Verfahren nach Anspruch 11,
wobei der Grünkörper (42) unter reduzierender Atmosphäre gesintert wird.

13. Verfahren nach einem der Ansprüche 11 oder 12,
wobei durch Zugabe von Wasserdampf gezielt ein Redox-Potential zur kontrollierten Oxidation des ferromagnetischen Werkstoffs eingestellt wird.

14. Verfahren nach einem der Ansprüche 11 bis 13,
wobei durch Einstellen eines Sauerstoffpartialdrucks, eines Temperaturbereichs, in dem der Sauerstoffpartialdruck zur Verfügung steht, und einer Zeitdauer die zumindest eine Lagenseite (28, 32) kontrolliert oxidiert wird.

15. Verfahren nach Anspruch 14
wobei der ferromagnetische Werkstoff Eisen enthält und
wobei der Sauerstoffpartialdruck, der Temperaturbereich, in dem der Sauerstoffpartialdruck zur Verfügung steht, und die Zeitdauer derartig eingestellt werden, dass der elektrisch isolierende Werkstoff einen vorgegebenen Anteil an Eisenmonooxid und/oder Trieisentetraoxid enthält.
